# EUROPEAN PATENT SPECIFICATION

(11) **EP 3 731 357 B1**
(45) Date of publication and mention of the grant of the patent: **31.08.2022**
(21) Application number: 18857388.5
(22) Date of filing: 20.12.2018
(51) Int. Cl.: H02G 3/04, H02G 3/06

(54) **CABLE TRAY ASSEMBLY**
KABELTRÄGERANORDNUNG
ENSEMBLE PLATEAU PORTE-CÂBLES

(30) Priority: 22.12.2017 ES 201731585 U
(43) Date of publication of application: 28.10.2020
(73) Proprietor: Unex Aparellaje Electrico S.L., 08903 L'Hospitalet de Llobregat (Barcelona) (ES)
(72) Inventor: MOSTAZO OVIEDO, José Antonio, 08903 L'Hospitalet de Llobregat (ES)
(74) Representative: Curell Suñol S.L.P.
(86) International application number: PCT/ES2018/070822
(87) International publication number: WO 2019/122488

(56) References cited:
- EP-A1- 2 112 733
- ES-U- 1 168 783
- JP-A- H1 023 632
- US-A1- 2015 001 352

## Description

### Field of the Invention

The invention is comprised in the field of cable trays that are used for guiding electric cables, optical fiber cables, or cables of another type.

More specifically, the invention relates to a cable tray assembly comprising:
- two cable tray segments, each of said two cable tray segments having a bottom wall and two side walls facing one another extending respectively from the two longitudinal sides of said bottom wall, said side walls having an outer side having a C-shaped section with an upper wing and a lower wing joined together by a web;
- and a joining plate, made up of a single part, which is coupled to two of said contiguous side walls, of the two cable tray segments arranged contiguous, for joining them together, said joining plate having two longitudinal edges which rest on said upper wing and lower wing of the two contiguous side walls.

### State of the Art

In known cable tray assemblies, the joining plate rests, at its longitudinal edges, on the upper wing and lower wing of the side walls of the cable tray segments and fixed to said side walls by means of screws. The drawback of this known configuration is that when the cable tray supports too much weight, the side walls bend, thereby causing the joining plate to rest on said side walls at support points where stresses concentrate. This concentration of stresses at the support points can damage the side walls or the joining plate. The use of a plurality of screws for fixing the joining plate helps to solve this problem, but it translates into a longer assembly time.

US2015001352A1 discloses a cable tray assembly according to the preamble of claim 1.

### Description of the Invention

The purpose of the invention is to provide a cable tray assembly of the type indicated above, which allows the cable tray to support more weight without the ends of the contiguous side walls or the joining plate becoming damaged, all this without significantly increasing the cost of manufacturing the parts and without complicating the operations that the user must perform to assemble the two cable tray segments with the joining part.

This purpose is achieved by means of a cable tray assembly of the type indicated above, characterized in that the joining plate is formed such that it is press fit between the upper wing and the lower wing of the two contiguous side walls, and in that the web of the contiguous side walls has an outer face provided with at least one rib extending in the longitudinal direction of the side wall, and said joining plate has a planar face which rests on said outer face of the web of the two contiguous side walls, said planar face comprising at least one groove extending along said joining plate in the longitudinal direction thereof and in which said rib of each of the two contiguous side walls fits when said joining plate is press fit between said upper wing and lower wing of the two contiguous side walls.

In the present document, the longitudinal direction of the joining plate is understood as the direction corresponding to the longitudinal direction of the side walls of the cable tray segments when said joining plate is press fit in said side walls.

As a result of this configuration according to the invention, the end segments of the two contiguous side walls form, along with the joining plate, a compact body along the entire length of said joining plate. This compact body has a higher moment of inertia than each side wall alone, so the end segments of the side walls are prevented from bending due to the weight of the cables on the cable tray. The support of the joining plate on the wings of the side walls therefore always takes place along the entire length of said joining plate, and not only at discrete support points, even when the cable tray supports a lot of weight. The formation of a groove and a corresponding rib in the joining part and in the side walls of the cable tray segments, respectively, does not significantly increase the cost of manufacturing these parts. Furthermore, the user can more readily perform the assembly as a result of the press fitting of the joining part in the ends of the side walls. This press fitting is performed as a result of a slight elastic deformation of the lower and upper wings of the side walls when the joining part is pushed towards the web of said side walls.

In some embodiments, at least one of the upper wing and lower wing of the two contiguous side walls comprises a notch extending in the longitudinal direction of the side wall, and at least one of the two longitudinal edges of the joining plate comprises a small rib extending in the longitudinal direction of said joining plate and fitting in said notch of the two contiguous side walls when said joining plate is press fit in these side walls. The main purpose of this notch and the corresponding small rib fitting therein is to indicate to the operator the moment in which the joining plate has been properly press fit between the upper wing and lower wing of the side walls. Proper fitting of the joining plate occurs when the small rib fits in the notch, which causes a slight click that is perceived by the user who is introducing the joining plate by pressing it between the upper wing and lower wing. Furthermore, a secondary purpose of fitting the small rib in the notch is to secure the press fitting of the joining plate onto the side walls.

Preferably, to further secure the press fitting of the joining plate onto the side walls, each of said upper wing and lower wing of the side walls comprises said notch, and each of said longitudinal edges of the joining plate comprises said small rib fitting in said notch when the joining plate is press fit between said upper wing and lower wing of the two contiguous side walls.

In some embodiments, one of the upper wing and the lower wing of the two contiguous side walls has a lip extending towards the other one of said upper wing or lower wing, such that said lip and the outer face of the web demarcate a channel in which one of the longitudinal edges of the joining plate fits when said joining plate is press fit between the upper wing and lower wing of the two contiguous side walls. Preferably, the lip is formed in the upper wing, so the same lip can be used for anchoring a lid of the cable tray. This configuration provides a more robust fitting of the joining plate in the side walls. Furthermore, it facilitates the operation of press fitting the joining plate in the side walls, an operation which can be performed by first placing the joining plate in an inclined position in order to introduce one of its longitudinal edges in the channel, and then pushing the joining plate to a straight fitting position.

In some embodiments, there is formed in said channel of the lower wing or the upper wing of the two contiguous side walls a leg extending in the longitudinal direction of the side wall, and there is formed on the corresponding longitudinal edge of the joining plate a throat extending in the longitudinal direction of said joining plate, such that said leg is introduced into said throat of the two contiguous side walls when the joining plate is press fit between the upper wing and lower wing of these side walls. The cooperation between the leg and the throat provides a particularly robust press fitting of the joining part. Preferably, in order to obtain an even more robust fitting, said leg is inclined towards the outer face of the web.

In some embodiments, the web of the two contiguous side walls has on its outer face two of said ribs parallel to one another extending in the longitudinal direction of the side wall, and the planar face of the joining plate has two of said grooves parallel to one another extending along the joining plate in the longitudinal direction thereof, such that each of said ribs of the two contiguous side walls fits in each of said grooves of the joining plate when said joining plate is press fit between said upper wing and lower wing of the two contiguous side walls. This configuration allows assuring the compactness of the assembly formed by the joining plate and each end of the side walls, and is particularly advantageous when the cable tray segments have a larger capacity, and the assembly must therefore support higher stresses.

Preferably, the planar face of the joining plate has at least one recess, other than the groove, on at least one of the transverse edges of the joining plate. This recess will allow more readily releasing the joining plate from the side walls by introducing in said recess a flat tip of a tool, such as a flat screwdriver, for example.

Preferably, in order to make it easier to manufacture the joining plate which can be obtained by extrusion, said recess extends along the joining plate, in the longitudinal direction thereof, between the two transverse edges of the joining plate.

Preferably, said recess is arranged close to one of the longitudinal edges of the joining plate. This arrangement allows applying greater prying force with the tip of the tool introduced in the recess, thereby making it easier to release the joining part.

Preferably, the joining plate has oblong through holes which extend in the longitudinal direction of said joining plate, and allow fixing the joining plate to the side walls by means of introducing screws therein. The use of screws is optional and aims to secure the fixing of the joining plate. In any case, as mentioned above, the configuration according to the invention prevents the side walls from bending under the weight of the cables. As a result, only one screw is required at each end of said joining part to secure the joining plate in a robust manner. Therefore, although screws are used, the assembly is considerably easier than in the prior art in which at least two screws must be used at each end of the joining plate.

In the preferred embodiments, the joining plate is symmetrical with respect to a central plane parallel to the longitudinal edges thereof. This makes assembly easier for the operator as he or she does not have to orient the joining part in order to fit it in the side walls.

The two cable tray segments are made of a polymer material, and the joining plate is made up of a single part made of a polymer material.

The cable tray segments are cable ladder segments each of which is formed by two coplanar side rails attached to one another by a plurality of cross members spaced apart from one another, said two side rails constituting the side walls of the cable tray segment, and said plurality of cross members constituting a discontinuous bearing surface for cables which constitutes the bottom wall of the cable tray segment. Each of said cross members is a profile made of a polymer material and each of said side rails is a profile made of a polymer material; and the inner side of each of said side rails, facing the opposite side rail, and the two ends of each of said cross members are formed such that said ends of the cross members are press fit onto said inner sides of the side rails. Cable ladder segments of this type are described in patent document WO2016046436A1.

The invention also comprises other detail features shown in the following detailed description of an embodiment of the invention and in the attached drawings.

### Brief Description of the Drawings

The advantages and features of the invention will be seen based on the following description in which preferred embodiments of the invention are described in a non-limiting manner with respect to the scope of the main claim, making reference to the attached drawings.
Figure 1 is a perspective view of two cable tray segments joined by joining plates according to a first embodiment.
Figure 2 is a perspective view of a joining plate according to the first embodiment.
Figure 3 is a profile view of the joining plate of Figure 2.
Figure 4 is a perspective view of the joining plate according to Figure 2 coupled to two contiguous side walls of the cable tray segments.
Figure 5 is a profile view of Figure 4.
Figure 6 is a detailed view of the upper portion of Figure 5.
Figure 7 is a detailed view of the lower portion of Figure 5.
Figure 8 is a perspective view of a joining plate according to a second embodiment.
Figure 9 is a profile view of the joining plate of Figure 8.
Figure 10 is a perspective view of the joining plate according to Figure 8 coupled to two contiguous side walls of the cable tray segments.
Figure 11 is a profile view of Figure 10.
Figure 12 is a detailed view of the upper portion of Figure 11.
Figure 13 is a detailed view of the lower portion of Figure 11.

### Detailed Description of Embodiments of the Invention

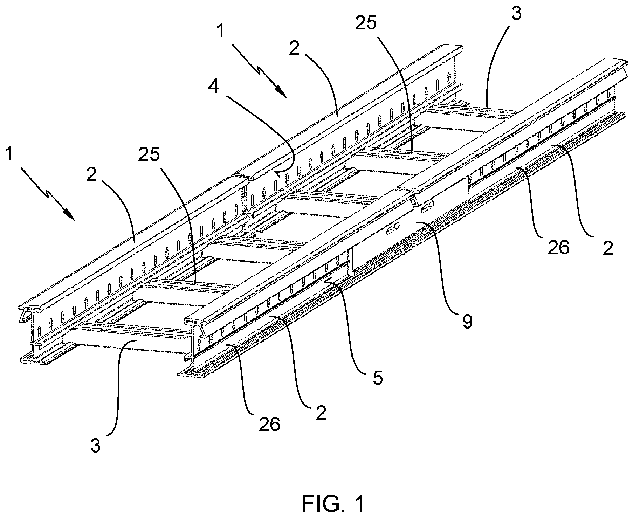

Figures 1 to 7 show a first embodiment of the cable tray assembly according to the invention, formed by two contiguously arranged cable tray segments 1 and joining plates 9 made up of a single part which are used for joining together said two cable tray segments 1 at their contiguous side walls.

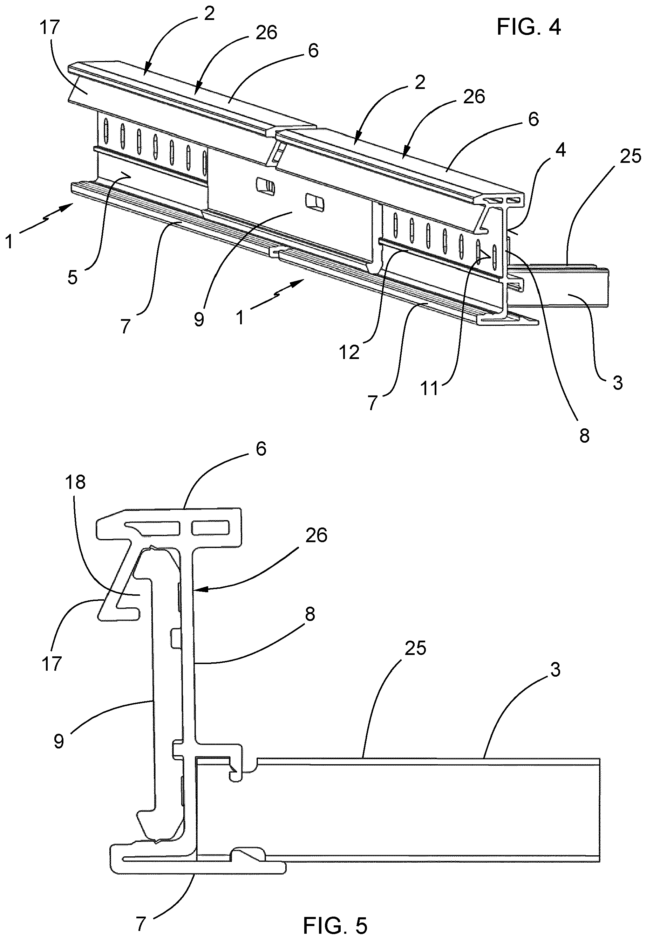

Each of the two cable tray segments 1 forms a bottom wall 25 and two side walls 26 facing one another extending respectively from the two longitudinal sides of said bottom wall 25. The side walls 26 have an outer side 5 having a C-shaped section with an upper wing 6 and a lower wing 7 joined together by a web 8. More specifically, in the depicted embodiment, the cable tray segments 1 are cable ladder segments, each of them formed by two coplanar side rails 2 attached to one another by a plurality of cross members 3 spaced apart from one another constituting a discontinuous bearing surface for cables. The cross members 3 constitute the bottom wall 25, in this case discontinuous, of the cable tray segments 1. The side rails 2 constitute the side walls 26 of said cable tray segments 1. The inner side 4 of each of the side rails 2, facing the opposite side rail 2, and the ends of the cross members 3 are formed such that said ends of the cross members 3 are press fit into said inner sides 4 facing of the side rails 2. To that end, in the depicted example, the inner sides 4 of the side rails 2 form a channel and the ends of the cross members are sized such that they enter said channel and are press fit into same, as can be seen in the profile view of Figure 5.

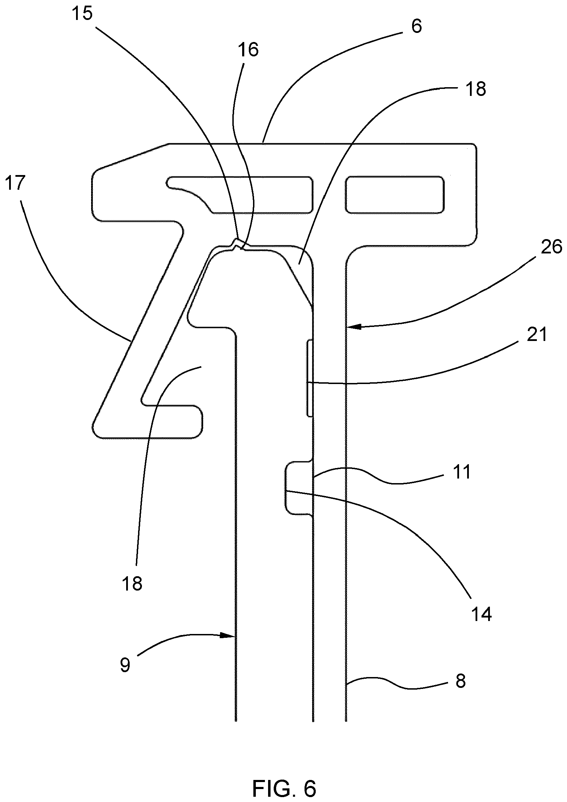

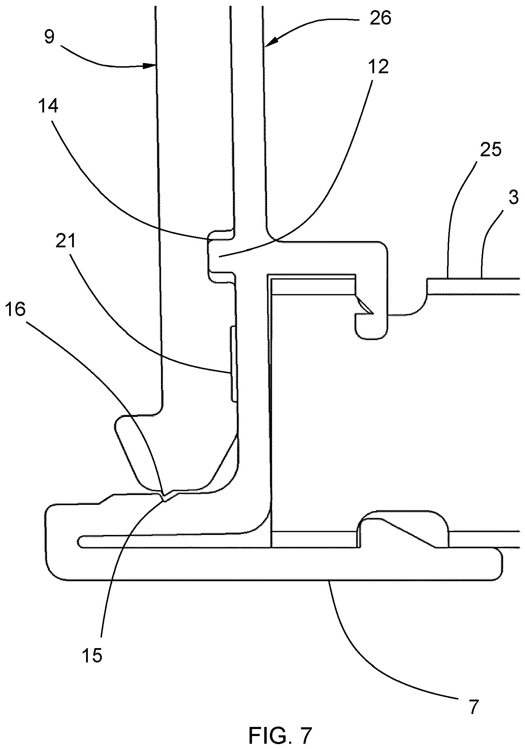

As can be seen in Figures 4 and 5, the outer side 5 of each of the side walls 26 has a C-shaped section with an upper wing 6 and a lower wing 7 joined together by a web 8. In the depicted example, the upper wing 6 of each of the side walls 26 has a lip 17 extending towards the lower wing 7, such that the lip 17 and the outer face 11 of the web 8 demarcate a channel 18. Both the upper wing 6 and the lower wing 7 of the contiguous side walls 26 have a notch 15 extending in the longitudinal direction of the side wall 26. The notch 15 of the upper wing 6 and the notch of the lower wing 7 can be seen in Figures 6 and 7, respectively. The web 8 of the side walls 26 has on its outer face 11 a rib 12 extending in the longitudinal direction of the side wall 26.

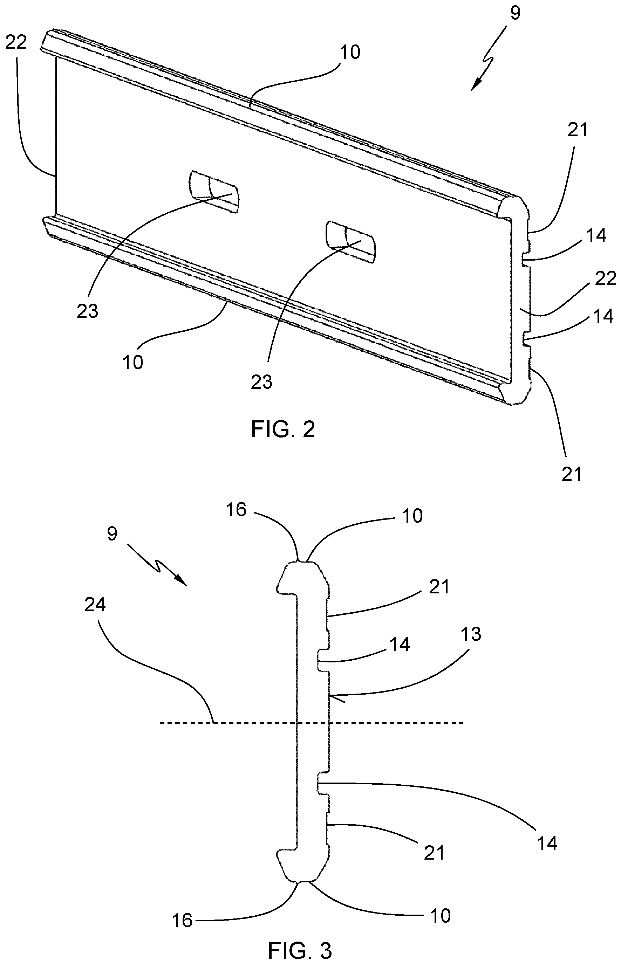

As can be seen in Figures 2 and 3, the joining plate 9 has a general rectangular shape, with two longitudinal edges 10 and two transverse edges 22. On the side to be arranged facing the outer face 11 of the web 8 of the side walls 26, the joining plate 9 has a planar face 13 on which two grooves 14 extending along said joining plate 9 in the longitudinal direction thereof are formed. The planar face 13 also has two recesses 21, other than the grooves 14, provided on the transverse edge 22 of the joining plate 9 close to one of the longitudinal edges 10 of the joining plate 9. These recesses 21 are formed by a channel extending along the joining plate 9 in the longitudinal direction thereof between the two transverse edges 22. As can be seen in Figures 5 to 7, each of the longitudinal edges 10 of the joining plate 9 has a small rib 16 extending in the longitudinal direction of the joining plate 9. Preferably, as can be seen in Figures 2 and 3, the joining plate is symmetrical with respect to a central plane 24 parallel to the longitudinal edges 10. Furthermore, the joining plate 9 comprises oblong through holes 23 which extend in the longitudinal direction thereof and allow, optionally, screwing the joining plate 9 to side walls 26 of the cable tray segments 1. In the depicted embodiment, the joining plate 9 is made up of a single part made of a polymer material. Preferably, it has a constant section, like the one shown in Figure 3. It is preferably manufactured by means of extrusion, and the oblong through holes 23 are made by subsequent machining of the extruded part.

To assemble the two cable tray segments 1 to one another, the side walls 26 of each segment are arranged such that they are contiguous. The joining plate 9 is then press fit into the ends of the two contiguous side walls 26, such that said joining plate 9 is press fit between the upper wing 6 and lower wing 7 of the two contiguous side walls 26, as shown in Figures 5 to 7. To that end, a longitudinal edge 10 of the joining plate 9 is first introduced into the channel 18 of the upper wing 6 of the two contiguous side walls 26. The joining plate 9 is then pushed towards the web 8 of the side walls 26 until the final position shown in Figures 5 to 7, in which the planar face 13 of said joining plate 9 rests on the outer face 11 of the web 8 of each side wall 26 and the rib 12 of each side wall 26 fits in the groove 14. In this final position, the other longitudinal edge 10 of the joining plate 9 rests on the lower wing 7 of the two contiguous side walls 26 and the small rib 16 of the longitudinal edge 10 fits in the notch 15 of the lower wing 7 of the two side walls 26. As soon as the small rib 16 fits in the notch 15, a click is produced indicating that the joining plate 9 has been properly placed in the final position. Optionally, the joining plate 9 can be fixed to the side walls 26 by means of screws (not depicted) which go through the oblong through holes 23. Since the joining plate 9 is symmetrical with respect to the central plane of symmetry 24 in this embodiment, it can be placed without distinction in two orientations with a rotation of 180°, thereby making assembly easier. In any of these two orientations, both longitudinal edges 10 fit in both the upper wing 6 and the lower wing 7 and the rib 12 fits in one of the two grooves 14. To remove the joining plate 9, a tool having a flat tip, such as a flat screwdriver, for example, can be introduced into one of the recesses 21 of the joining plate 9, prying the joining plate out.

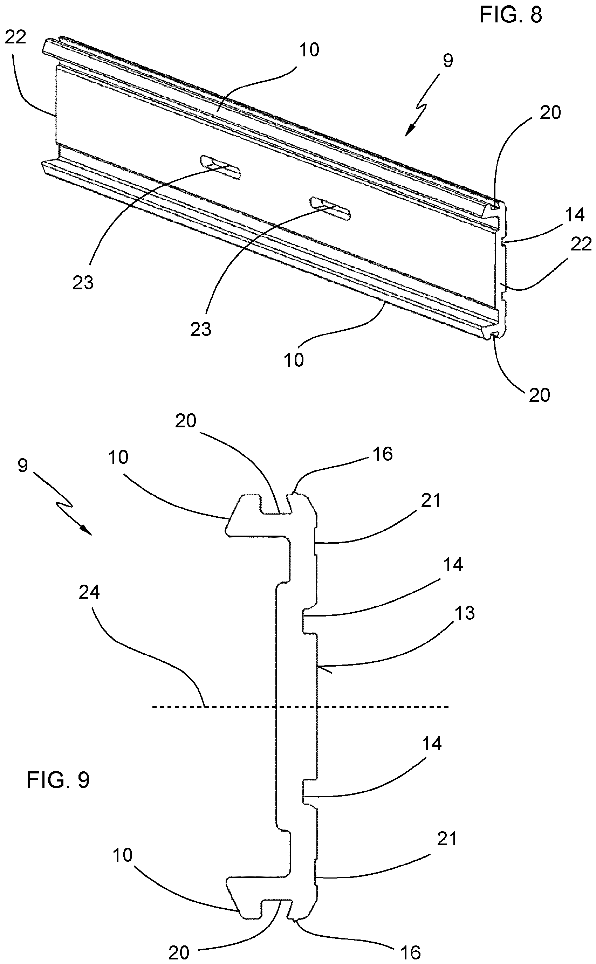

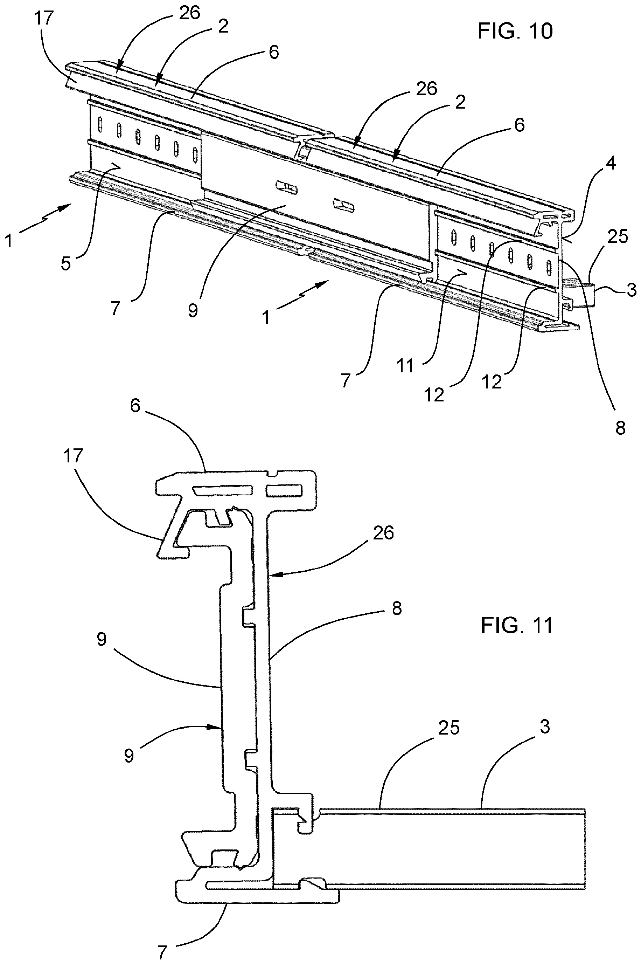

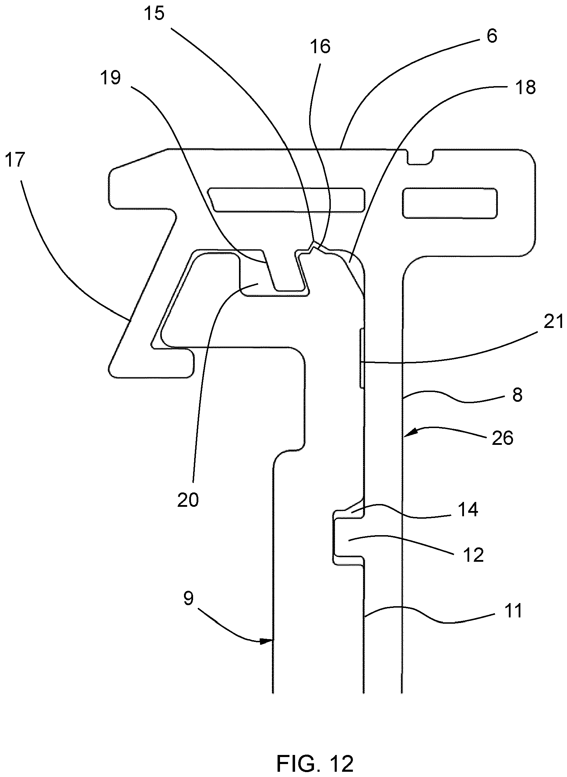

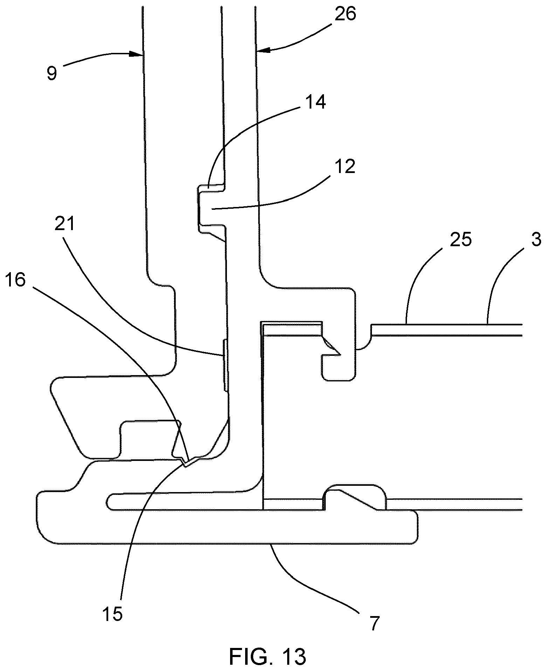

Figures 8 to 13 show a second embodiment which only differs from the first embodiment substantially in the details set forth below. The same reference numbers as in the first embodiment have been used in these drawings to designate similar elements. This second embodiment has the particularity that there is formed in the channel 18 a leg 19 which extends in the longitudinal direction of the side wall 26 and is inclined towards the outer face 11 of the web 8, and there is formed on the corresponding longitudinal edge 10 of the joining plate 9a a throat 20 extending in the longitudinal direction of the joining plate 9, such that the leg 19 is introduced into the throat 20 of the contiguous side walls 26 when the joining plate 9 is press fit between the upper wing 6 and lower wing 7 of the two contiguous side walls 26. Furthermore, as can be seen in Figures 10 and 11, the web 8 of each side wall 26 has on its outer face 11 two ribs 12 parallel to one another extending in the longitudinal direction of the side wall 26, and the planar face 13 of the joining plate 9 has two grooves 14 parallel to one another extending along the joining plate 9, such that each of the ribs 12 of each side wall 26 fits in each of the grooves 14 of the joining plate 9. Like in the preceding embodiment, this joining plate 9 is also symmetrical with respect to a central plane of symmetry 24 parallel to the longitudinal edges 10. As a result, the joining plate 9 can be placed without distinction in two orientations with a rotation of 180°, they making assembly easier. In any of these two orientations, both longitudinal edges 10 fit in both the upper wing 6 and the lower wing 7 and each of the two ribs 12 fits in one of the two grooves 14.

In both embodiments, the cross members 3 and the side rails 2 are profiles made of a polymer material and the joining plate 9 is made up of a single part made of a polymer material. The polymer material of the cross members 3, the side rails 2, and the joining plate 9 can be different or the same for all of them. Preferably, the polymer material is a thermoplastic, such as PVC, polycarbonate, or polypropylene. It can also be a thermosetting resin, such as glass fiber-reinforced polyester. Preferably, the polymer material is an electrical insulating material with a surface resistivity greater than 100 MΩ (surface resistivity measured according to standard EN 62631-3-2:2016).

## Claims

1. A cable tray assembly, comprising:
- two cable tray segments (1), each of said two cable tray segments (1) having a bottom wall (25) and two side walls (26) facing one another extending respectively from the two longitudinal sides of said bottom wall (25), said side walls (26) having an outer side (5) having a C-shaped section with an upper wing (6) and a lower wing (7) joined together by a web (8);
wherein said two cable tray segments (1) are cable ladder segments each of which is formed by two coplanar side rails (2) attached to one another by a plurality of cross members (3) spaced apart from one another, said two side rails (2) constituting said side walls (26) of the cable tray segment (1), and said plurality of cross members (3) constituting a discontinuous bearing surface for cables which constitutes said bottom wall (25) of the cable tray segment (1); and wherein the inner side (4) of each of said side rails (2), facing the opposite side rail (2), and the two ends of each of said cross members (3) are formed such that said ends of the cross members (3) are press fit onto said inner sides (4) of the side rails (2).
- and a joining plate (9), made up of a single part, which is coupled to two of said contiguous side walls (26), of the two contiguously arranged cable tray segments (1), for joining them together, said joining plate (9) having two longitudinal edges (10) which rest on said upper wing (6) and lower wing (7) of the two contiguous side walls (26) and said joining plate (9) being formed such that it is press fit between said upper wing (6) and said lower wing (7) of the two contiguous side walls (26);
**characterized in that**:
each of said cross members (3) is a profile made of a polymer material and each of said side rails (2) is a profile made of a polymer material;
said joining plate (9) is made up of a single part made of a polymer material;
said web (8) of the contiguous side walls (26) has an outer face (11) provided with at least one rib (12) extending in the longitudinal direction of said side wall (26), and said joining plate (9) has a planar face (13) which rests on said outer face (11) of the web (8) of the two contiguous side walls (26), said planar face (13) comprising at least one groove (14) extending along said joining plate (9) in the longitudinal direction thereof and in which said rib (12) of each of the two contiguous side walls (26) fits when said joining plate (9) is press fit between said upper wing (6) and lower wing (7) of the two contiguous side walls (2).

2. The cable tray assembly according to claim 1, **characterized in that** at least one of said upper wing (6) and lower wing (7) of the two contiguous side walls (26) comprises a notch (15) extending in the longitudinal direction of the side wall (26), and at least one of said two longitudinal edges (10) of said joining plate (9) comprises a small rib (16) extending in the longitudinal direction of said joining plate (9) and fitting in said notch (15) of the two contiguous side walls (26) when said joining plate (9) is press fit between said upper wing (6) and lower wing (7) of the two contiguous side walls (26).

3. The cable tray assembly according to claim 2, **characterized in that** each of said upper wing (6) and lower wing (7) of the side walls (26) comprises said notch (15), and each of said longitudinal edges (13) of the joining plate (9) comprises said small rib (16) fitting in said notch (15) when said joining plate (9) is press fit between said upper wing (6) and lower wing (7) of the two contiguous side walls (26).

4. The cable tray assembly according to any one of claims 1 to 3, **characterized in that** one of said upper wing (6) and said lower wing (7) of the two contiguous side walls (2) has a lip (17) extending towards the other one of said upper wing (6) or lower wing (7), such that said lip (17) and said outer face (11) of the web (8) demarcate a channel (18) in which one of said longitudinal edges (10) of the joining plate (9) fits when said joining plate (9) is press fit between said upper wing (6) and lower wing (7) of the two contiguous side walls (26).

5. The cable tray assembly according to claim 4, **characterized in that** there is formed in said channel (18) of the two contiguous side walls (26) a leg (19) extending in the longitudinal direction of the side wall (26), and there is formed on the corresponding longitudinal edge (10) of said joining plate (9) throat (20) extending in the longitudinal direction of said joining plate (9), such that said leg (19) is introduced into said throat (20) of the two contiguous side walls (26) when said joining plate (9) is press fit between said upper wing (6) and lower wing (7) of the two contiguous side walls (26).

6. The cable tray assembly according to claim 5, **characterized in that** said leg (19) is inclined towards said outer face (11) of the web (8).

7. The cable tray assembly according to any one of claims 1 to 6, **characterized in that** said web (8) of the two contiguous side walls (26) has on its outer face (11) two of said ribs (12) parallel to one another extending in the longitudinal direction of the side wall (26), and said planar face (13) of the joining plate (9) has two of said grooves (14) parallel to one another extending along said joining plate (9) in the longitudinal direction thereof, such that each of said ribs (12) of the two contiguous side walls (26) fits in each of said grooves (14) of the joining plate (9) when said joining plate (9) is press fit between said upper wing (6) and lower wing (7) of the two contiguous side walls (26).

8. The cable tray assembly according to any one of claims 1 to 7, **characterized in that** said planar face (13) of said joining plate (9) has at least one recess (21), other than said groove (14), on at least one of the transverse edges (22) of the joining plate (9).

9. The cable tray assembly according to claim 8, **characterized in that** said recess (21) extends along said joining plate (9), in the longitudinal direction thereof, between said two transverse edges (22) of the joining plate (9).

10. The cable tray assembly according to any one of claims 8 or 9, **characterized in that** said recess (21) is arranged close to one of said longitudinal edges (10) of the joining plate (9).

11. The cable tray assembly according to any one of claims 1 to 10, **characterized in that** said joining plate (9) has oblong through holes (23) extending in the longitudinal direction of said joining plate (9).

12. The cable tray assembly according to any one of claims 1 to 11, **characterized in that** said joining plate (9) is symmetrical with respect to a central plane (24) parallel to said longitudinal edges (10).

13. The cable tray assembly according to any one of claims 1 to 12, **characterized in that** said two cable tray segments (1) are made of a polymer material.

## Patentansprüche

1. Eine Kabelbahnanordnung, aufweisend:
- zwei Kabelträgersegmente (1), wobei jedes der zwei Kabelträgersegmente (1) eine untere Wand (25) und zwei Seitenwände (26) aufweist, welche sich gegenüberliegend jeweils von den zwei longitudinalen Seiten der besagten unteren Wand (25) erstrecken, wobei die Seitenwände (26) eine äußere Seite (5), welche einen C-förmigen Abschnitt mit einem oberen Flügel (6) und einem unteren Flügel (7), die durch ein Steg (8) miteinander verbunden sind, aufweisen;
wobei besagte zwei Kabelträgersegmente (1) Kabelleitersegmente sind, von denen jedes durch zwei koplanare Seitenschienen (2) gebildet wird, die miteinander durch eine Vielzahl von Querträgern (3), die voneinander beabstandet sind, verbunden sind, wobei die besagten zwei Seitenschienen (2) die besagte Seitenwand (26) des Kabelträgersegments (1) bilden, und wobei besagte Vielzahl von Querträgern (3) eine diskontinuierliche Lagerfläche für Kabel bildet, die die besagte untere Wand (25) des Kabelträgersegments (1) bildet; und wobei die innere Seite (4) von jeder der besagten Seitenschienen (2), die zugewandt zur gegenüberliegenden Seitenschiene (2) sind, und die beiden Enden von jedem der besagten Querträger (3) so ausgebildet sind, dass die besagten Enden der Querträger (3) auf den besagten inneren Seiten (4) der Seitenschienen (2) eingepresst sind;
- und eine Verbindungsplatte (9), die aus einem einzigen Teil besteht, die mit zwei der besagten kontinuierlichen Seitenwände (26), von den zwei kontinuierlich angeordneten Kabelträgersegmenten (1), verbunden ist, um diese zusammenzufügen, wobei die besagte Verbindungsplatte (9) zwei longitudinale Kanten (10) aufweist, die auf dem besagten oberen Flügel (6) und unteren Flügel (7) der zwei kontinuierlichen Seitenwände (26) angeordnet sind und wobei die besagte Verbindungsplatte (9) so ausgebildet ist, dass diese zwischen dem besagten oberen Flügel (6) und besagten unteren Flügel (7) der zwei kontinuierlichen Seitenwände (26) eingepresst ist;
**dadurch gekennzeichnet, dass**:
jeder der besagten Querträger (3) ein Profil ist, das aus einem Polymermaterial hergestellt ist und jede der besagten Seitenschienen (2) ein Profil ist, das aus einem Polymermaterial hergestellt ist;
die besagte Verbindungsplatte (9) aus einem einzigen Teil, das aus einem Polymermaterial hergestellt ist, besteht;
der besagte Steg (8) der kontinuierlichen Seitenwände (26) eine äußere Oberfläche (11) aufweist, die mit mindestens einer Rippe (12), die sich in die longitudinale Richtung der besagten Seitenwand (26) erstreckt, ausgebildet ist, und besagte Verbindungsplatte (9) eine planare Oberfläche (13), die auf der besagten äußeren Oberfläche (11) des Steges (8) der zwei kontinuierlichen Seitenwände (26) angeordnet ist, aufweist, wobei die besagte planare Oberfläche (13) mindestens eine Nut (14) aufweist, die sich entlang der besagten Verbindungsplatte (9) in deren longitudinale Richtung erstreckt und in die die besagte Rippe (12) von jeder der zwei kontinuierlichen Seitenwände (26) passt, wenn die besagte Verbindungsplatte (9) zwischen dem besagten oberen Flügel (6) und unteren Flügel (7) der zwei kontinuierlichen Seitenwände (2) eingepresst ist.

2. Die Kabelbahnanordnung nach Anspruch 1, **dadurch gekennzeichnet, dass** mindestens einer von dem besagten oberen Flügel (6) und unteren Flügel (7) der zwei kontinuierlichen Seitenwände (26) eine Kerbe (15) aufweist, die sich in die longitudinale Richtung der Seitenwand (26) erstreckt, und mindestens eine der besagten zwei longitudinalen Kanten (10) der besagten Verbindungsplatte (9) eine kleine Rippe (16) aufweist, die sich in die longitudinale Richtung der besagten Verbindungsplatte (9) erstreckt und in die besagte Kerbe (15) der zwei kontinuierlichen Seitenwände (26) passt, wenn besagte Verbindungsplatte (9) im Presssitz zwischen dem besagten oberen Flügel (6) und unteren Flügel (7) der zwei kontinuierlichen Seitenwände (26) angeordnet ist.

3. Die Kabelbahnanordnung nach Anspruch 2, **dadurch gekennzeichnet, dass** jeder von dem besagten oberen Flügel (6) und unteren Flügel (7) der Seitenwände (26) die besagte Kerbe (15) aufweist, und jede von den besagten longitudinalen Kanten (13) der Verbindungsplatte (9) die besagte kleine Rippe (16), die in die besagte Kerbe (15) passt, wenn die besagte Verbindungsplatte (9) zwischen dem besagten oberen Flügel (6) und unteren Flügel (7) der zwei kontinuierlichen Seitenwände (26) eingepresst ist, aufweist.

4. Die Kabelbahnanordnung nach einem der Ansprüche 1 bis 3, **dadurch gekennzeichnet, dass** einer von dem besagten oberen Flügel (6) und besagten unteren Flügel (7) der zwei kontinuierlichen Seitenwände (2) eine Lippe (17) aufweist, die sich in Richtung des anderen von dem besagten oberen Flügel (6) oder unteren Flügel (7) erstreckt, sodass die besagte Lippe (17) und die besagte äußere Oberfläche (11) des Steges (8) einen Kanal (18) abgrenzen, in den eine der besagten longitudinalen Kanten (10) der Verbindungsplatte (9) passt, wenn die besagte Verbindungsplatte (9) zwischen dem besagten oberen Flügel (6) und unteren Flügel (7) der zwei kontinuierlichen Seitenwände (26) eingepresst ist.

5. Die Kabelbahnanordnung nach Anspruch 4, **dadurch gekennzeichnet, dass** in dem besagten Kanal (18) der zwei kontinuierlichen Seitenwände (26) ein Schenkel (19) ausgebildet ist, der sich in die longitudinale Richtung der Seitenwand (26) erstreckt, und das auf der entsprechenden longitudinalen Kante (10) der besagten Verbindungsplatte (9) ein Hals (20) ausgebildet ist, der sich in die longitudinale Richtung der besagten Verbindungsplatte (9) erstreckt, sodass der besagte Schenkel (19) in den besagten Hals (20) der zwei kontinuierlichen Seitenwände (26) eingeführt wird, wenn die besagte Verbindungsplatte (9) zwischen dem besagten oberen Flügel (6) und unteren Flügel (7) der zwei kontinuierlichen Seitenwände (26) eingepresst ist.

6. Die Kabelbahnanordnung nach Anspruch 5, **dadurch gekennzeichnet, dass** der besagte Schenkel (19) in Richtung der besagten äußeren Oberfläche (11) des Steges (8) geneigt ist.

7. Die Kabelbahnanordnung nach einem der Ansprüche 1 bis 6, **dadurch gekennzeichnet, dass** der besagte Steg (8) der zwei kontinuierlichen Seitenwände (26) auf seiner äußeren Oberfläche (11) zwei der besagten Rippen (12), die parallel zueinander angeordnet sind und sich in die longitudinale Richtung der Seitenwand (26) erstrecken, aufweist und besagte planare Oberfläche (13) der Verbindungsplatte (9) zwei der besagten Nuten (14), die parallel zueinander sind und sich entlang der besagten Verbindungsplatte (9) in deren longitudinale Richtung erstrecken, aufweist, sodass jede der besagten Rippen (12) der zwei kontinuierlichen Seitenwände (26) in jede der besagten Nuten (14) der Verbindungsplatte (9) passen, wenn die besagte Verbindungsplatte (9) zwischen dem besagten oberen Flügel (6) und unteren Flügel (7) der zwei kontinuierlichen Seitenwände (26) eingepresst ist.

8. Die Kabelbahnanordnung nach einem der Ansprüche 1 bis 7, **dadurch gekennzeichnet, dass** die besagte planare Oberfläche (13) der besagten Verbindungsplatte (9) mindestens eine Aussparung (21), außer der besagten Nut (14), auf mindestens einer der transversalen Kanten (22) der Verbindungsplatte (9) aufweist.

9. Die Kabelbahnanordnung nach Anspruch 8, **dadurch gekennzeichnet, dass** die besagte Aussparung (21) sich entlang der Verbindungsplatte (9) erstreckt, in deren longitudinale Richtung, zwischen den besagten zwei transversalen Kanten (22) der Verbindungsplatte (9).

10. Die Kabelbahnanordnung nach einem der Ansprüche 8 oder 9, **dadurch gekennzeichnet, dass** die besagte Aussparung (21) nahe einer der besagten longitudinalen Kanten (10) der Verbindungsplatte (9) angeordnet ist.

11. Die Kabelbahnanordnung nach einem der Ansprüche 1 bis 10, **dadurch gekennzeichnet, dass** die besagte Verbindungsplatte (9) längliche Durchgangslöcher (23), die sich in die longitudinale Richtung der besagten Verbindungsplatte (9) erstrecken, aufweist.

12. Die Kabelbahnanordnung nach einem der Ansprüche 1 bis 11, **dadurch gekennzeichnet, dass** die besagte Verbindungsplatte (9) symmetrisch ist in Bezug zu einer zentralen Ebene (24), die parallel ist zu den besagten longitudinalen Kanten (10).

13. Die Kabelbahnanordnung nach einem der Ansprüche 1 bis 12, **dadurch gekennzeichnet, dass** die besagten zwei Kabelträgersegmente (1) aus einem Polymermaterial hergestellt sind.

## Revendications

1. Ensemble de chemin de câbles, comprenant :
- deux segments de chemin de câbles (1), chacun desdits deux segments de chemin de câbles (1) comportant une paroi de fond (25) et deux parois latérales (26) qui se font face l'une l'autre et qui s'étendent respectivement depuis les deux côtés longitudinaux de ladite paroi de fond (25), lesdites parois latérales (26) comportant un côté externe (5) qui présente une section en forme de C avec une aile supérieure (6) et une aile inférieure (7) jointes ensemble par une âme (8) ;
dans lequel lesdits deux segments de chemin de câbles (1) sont des segments d'échelle à câbles dont chacun est formé par deux rails latéraux coplanaires (2) qui sont liés l'un à l'autre par une pluralité de traverses (3) qui sont espacées les unes des autres, lesdits deux rails latéraux (2) constituant lesdites parois latérales (26) du segment de chemin de câbles (1), et ladite pluralité de traverses (3) constituant une surface d'appui discontinue pour des câbles qui constitue ladite paroi de fond (25) du segment de chemin de câbles (1) ; et dans lequel le côté interne (4) de chacun desdits rails latéraux (2), faisant face au rail latéral opposé (2), et les deux extrémités de chacun desdites traverses (3) sont formés de telle sorte que lesdites extrémités des traverses (3) soient ajustées par pression sur lesdits côtés internes (4) des rails latéraux (2) ;
- et une plaque de jonction (9), qui est constituée d' seule pièce, laquelle est couplée à deux desdites parois latérales contiguës (26), des deux segments de chemin de câbles agencés de façon contiguë (1), pour les joindre ensemble, ladite plaque de jonction (9) comportant deux bords longitudinaux (10) qui reposent sur ladite aile supérieure (6) et ladite aile inférieure (7) des deux parois latérales contiguës (26), et ladite plaque de jonction (9) étant formée de telle sorte qu'elle soit ajustée par pression entre ladite aile supérieure (6) et ladite aile inférieure (7) des deux parois latérales contiguës (26) ;
**caractérisé en ce que** :
chacun desdites traverses (3) est un profil réalisé en un matériau polymère et chacun desdits rails latéraux (2) est un profil réalisé en un matériau polymère ;
ladite plaque de jonction (9) est constituée d'une seule pièce réalisée en un matériau polymère ;
ladite âme (8) des parois latérales contiguës (26) comporte une face externe (11) qui est munie d'au moins une nervure (12) qui s'étend dans la direction longitudinale de ladite paroi latérale (26), et ladite plaque de jonction (9) comporte une face plane (13) qui repose sur ladite face externe (11) de l'âme (8) des deux parois latérales contiguës (26), ladite face plane (13) comprenant au moins une rainure (14) qui s'étend le long de ladite plaque de jonction (9) dans sa direction longitudinale et dans laquelle ladite nervure (12) de chacune des deux parois latérales contiguës (26) est ajustée lorsque ladite plaque de jonction (9) est ajustée par pression entre ladite aile supérieure (6) et ladite aile inférieure (7) des deux rails latéraux contigus (2).

2. Ensemble de chemin de câbles selon la revendication 1, **caractérisé en ce qu'**au moins une aile parmi ladite aile supérieure (6) et ladite aile inférieure (7) des deux parois latérales contiguës (26) comprend une encoche (15) qui s'étend dans la direction longitudinale de la paroi latérale (26), et au moins l'un desdits deux bords longitudinaux (10) de ladite plaque de jonction (9) comprend une petite nervure (16) qui s'étend dans la direction longitudinale de ladite plaque de jonction (9) et qui est ajustée dans ladite encoche (15) des deux parois latérales contiguës (26) lorsque ladite plaque de jonction (9) est ajustée par pression entre ladite aile supérieure (6) et ladite aile inférieure (7) des deux parois latérales contiguës (26) .

3. Ensemble de chemin de câbles selon la revendication 2, **caractérisé en ce que** chaque aile parmi ladite aile supérieure (6) et ladite aile inférieure (7) des parois latérales (26) comprend ladite encoche (15), et chacun desdits bords longitudinaux (13) de la plaque de jonction (9) comprend ladite petite nervure (16) qui est ajustée dans ladite encoche (15) lorsque ladite plaque de jonction (9) est ajustée par pression entre ladite aile supérieure (6) et ladite aile inférieure (7) des deux parois latérales contiguës (26).

4. Ensemble de chemin de câbles selon l'une quelconque des revendications 1 à 3, **caractérisé en ce qu'**une aile parmi ladite aile supérieure (6) et ladite aile inférieure (7) des deux parois latérales contiguës (26) comporte une lèvre (17) qui s'étend en direction de l'autre aile parmi ladite aile supérieure (6) et ladite aile inférieure (7), de telle sorte que ladite lèvre (17) et ladite face externe (11) de l'âme (8) délimitent un canal (18) dans lequel l'un desdits bords longitudinaux (10) de la plaque de jonction (9) est ajusté lorsque ladite plaque de jonction (9) est ajustée par pression entre ladite aile supérieure (6) et ladite aile inférieure (7) des deux parois latérales contiguës (26).

5. Ensemble de chemin de câbles selon la revendication 4, **caractérisé en ce qu'**une patte (19) qui s'étend dans la direction longitudinale de la paroi latérale (26) est formée dans ledit canal (18) des deux parois latérales contiguës (26), et une gorge (20) qui s'étend dans la direction longitudinale de ladite plaque de jonction (9) est formée sur le bord longitudinal correspondant (10) de ladite plaque de jonction (9), de telle sorte que ladite patte (19) soit introduite à l'intérieur de ladite gorge (20) des deux parois latérales contiguës (26) lorsque ladite plaque de jonction (9) est ajustée par pression entre ladite aile supérieure (6) et ladite aile inférieure (7) des deux parois latérales contiguës (26).

6. Ensemble de chemin de câbles selon la revendication 5, **caractérisé en ce que** ladite patte (19) est inclinée en direction de ladite face externe (11) de l'âme (8).

7. Ensemble de chemin de câbles selon l'une quelconque des revendications 1 à 6, **caractérisé en ce que** ladite âme (8) des deux parois latérales contiguës (26) comporte, sur sa face externe (11), deux desdites nervures (12) qui sont parallèles l'une à l'autre et qui s'étendent dans la direction longitudinale de la paroi latérale (26), et ladite face plane (13) de la plaque de jonction (9) comporte deux desdites rainures (14) qui sont parallèles l'une à l'autre et qui s'étendent le long de ladite plaque de jonction (9) dans sa direction longitudinale, de telle sorte que chacune desdites nervures (12) des deux parois latérales contiguës (26) soit ajustée dans chacune desdites rainures (14) de la plaque de jonction (9) lorsque ladite plaque de jonction (9) est ajustée par pression entre ladite aile supérieure (6) et ladite aile inférieure (7) des deux parois latérales contiguës (26) .

8. Ensemble de chemin de câbles selon l'une quelconque des revendications 1 à 7, **caractérisé en ce que** ladite face plane (13) de ladite plaque de jonction (9) comporte au moins un évidement (21), autre que ladite rainure (14), sur au moins l'un des bords transversaux (22) de la plaque de jonction (9).

9. Ensemble de chemin de câbles selon la revendication 8, **caractérisé en ce que** ledit évidement (21) s'étend le long de ladite plaque de jonction (9), dans sa direction longitudinale, entre lesdits deux bords transversaux (22) de la plaque de jonction (9).

10. Ensemble de chemin de câbles selon l'une quelconque des revendications 8 ou 9, **caractérisé en ce que** ledit évidement (21) est agencé à proximité de l'un desdits bords longitudinaux (10) de la plaque de jonction (9).

11. Ensemble de chemin de câbles selon l'une quelconque des revendications 1 à 10, **caractérisé en ce que** ladite plaque de jonction (9) comporte des trous traversants oblongs (23) qui s'étendent dans la direction longitudinale de ladite plaque de jonction (9).

12. Ensemble de chemin de câbles selon l'une quelconque des revendications 1 à 11, **caractérisé en ce que** ladite plaque de jonction (9) est symétrique par rapport à un plan central (24) qui est parallèle auxdits bords longitudinaux (10).

13. Ensemble de chemin de câbles selon l'une quelconque des revendications 1 à 12, **caractérisé en ce que** lesdits deux segments de chemin de câbles (1) sont réalisés en un matériau polymère.
